# EUROPÄISCHE PATENTSCHRIFT

(11) **EP 0 556 760 B1**
(45) Veröffentlichungstag und Bekanntmachung des Hinweises auf die Patenterteilung: **03.05.1995**
(21) Anmeldenummer: 93102330.3
(22) Anmeldetag: 15.02.1993
(51) Int. Cl.: B23Q 1/01, B23Q 3/06

(54) **Spannvorrichtung für Flachmaterial**
Clamping device for a flat workpiece
Dispositif de serrage pour des pièces de forme plane

(30) Priorität: 15.02.1992 DE 4204520
(43) Veröffentlichungstag der Anmeldung: 25.08.1993
(73) Patentinhaber: ROTOX GmbH B. EISENBACH, D-56858 Grenderich (DE)
(72) Erfinder: Eisenbach, Bernhard, W-6259 Brechen (DE)
(74) Vertreter: Katscher, Helmut, Dipl.-Ing.

(56) Entgegenhaltungen:
- DE-A- 2 045 244
- DE-U- 8 704 208
- SU-A- 1 585 120
- US-A- 3 412 644
- US-A- 3 902 706

## Beschreibung

Die Erfindung betrifft eine Spannvorrichtung zum Aufspannen von Flachmaterial, insbesondere Flachstäben, Platten, Blechen od.dgl., auf einer Bearbeitungsmachine, die eine Aufspanneinrichtung für rechteckige Profilstäbe aufweist.

Zur Bearbeitung von im wesentlichen rechteckigen Profilstäben, insbesondere Kunststoff- oder Aluminium-Hohlprofilen für Fensterrahmen und Türrahmen, sind zahlreiche Bearbeitungsmaschinen im Einsatz, beispielsweise handgesteuerte Kopierfräsmaschinen, CNC-gesteuerte Fräsautomaten oder - bevorzugt für die Stahlprofilbearbeitung - Plasmaschneidmaschinen. Die Aufspanneinrichtungen dieser Bearbeitungsmaschinen sind wegen des überwiegenden Einsatzbereiches für rechteckige Profilstäbe ausgelegt und weisen üblicherweise eine seitliche Anschlagfläche auf, gegen die der zu bearbeitende Profilstab mit zwei Spannzylindern gespannt wird, z.B die Aufspanneinrichtung gemäß DE-A-2 045 244.

Für die Bearbeitung von Flachmaterial, wie Flachstäben, Platten, Blechen od.dgl., sind diese vorhandenen Aufspanneinrichtungen nicht geeignet. Wenn Flachmaterial bearbeitet werden soll, muß es mit Schraubzwingen oder ähnlichen Spanneinrichtungen an der Oberseite der Aufspanneinrichtung oder einem darin eingespannten Profilstab umständlich von Hand festgespannt werden. Ein rascher Werkstückwechsel ist dadurch nicht möglich.

Aufgabe der Erfindung ist es, eine Spannvorrichtung der eingangs genannten Gattung zu schaffen, die als konstruktiv einfach aufgebaute Zusatzvorrichtung für derartige Bearbeitungsmaschinen eingesetzt werden kann, um auch für Flachmaterial eine rasch zu betätigende und zuverlässige Spannmöglichkeit zu schaffen, ohne daß hierfür aufwendige Änderungen an der vorhandenen Aufspanneinrichtung erforderlich sind.

Diese Aufgabe wird erfindungsgemäß dadurch gelöst, daß ein in die Aufspanneinrichtung der Bearbeitungsmaschine einspannbarer Grundkörper Spannvorrichtung an seiner Oberseite eine Auflagefläche für das Flachmaterial bildet, wobei die Auflagefläche mindestens in einem mittleren Bearbeitungsbereich eine Aussparung aufweist, ein Kantenanschlag für das Flachmaterial von dem einen, äußeren Längsrand der Auflagefläche entgegengesetzt zum Grundkörper vorspringt, und oberhalb der Auflagefläche mindestens zwei jeweils über einen Träger mit dem Grundkörper starr verbundene Spannzylinder angeordnet sind, die das Flachmaterial gegen die Auflagefläche spannen.

Der Grundkörper der Spannvorrichtung wird anstelle eines rechteckigen Profilstabs, für den die Aufspanneinrichtung der Bearbeitungsmaschine ausgelegt ist, in diese Aufspanneinrichtung aufgenommen. Dann bildet die Spannvorrichtung an ihrer Oberseite die Aufnahme für das Flachmaterial. Das Flechmaterial wird mit seiner Vorderkante an den Kantenanschlag angelegt und mit den beiden Spannzylindern festgespannt. Die im Bearbeitungsbereich vorgesehene Aussparung ermöglicht die unbehinderte Bearbeitung, bei der das Fräs- bzw. Bohrwerkzeug oder der Plasmaschneidstrahl an der Werkstückunterseite unbehindert austreten kann.

Auf diese Weise können Bohrungen, Profilöffnungen, Schloßkastenausnehmungen und andere Durchbrechungen am Flachmaterial ausgeführt werden.

Vorteilhafte Ausgestaltungen des Erfindungsgedankens sind Gegenstand von Unteransprüchen.

Die Erfindung wird nachfolgend an einem Ausführungsbeispiel näher erläutert, das in der Zeichnung dargestellt ist. Es zeigt:
- Fig. 1: eine Spannvorrichtung für Flachmaterial in einer Stirnansicht,
- Fig. 2: eine Draufsicht auf die Spannvorrichtung nach Fig. 1,
- Fig. 3: die Spannvorrichtung nach den Fig. 1 und 2, die in der Aufspanneinrichtung einer Bearbeitungsmaschine aufgenommen ist, in einer Stirnansicht und
- Fig. 4: eine Draufsicht auf die Anordnung nach Fig. 3.

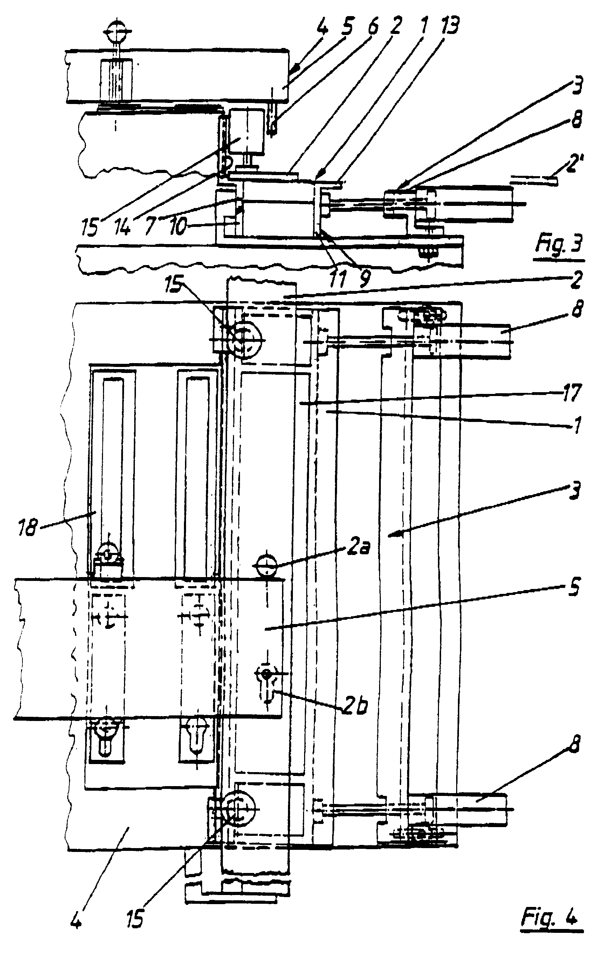

Die in der Zeichnung dargestellte Spannvorrichtung 1 ist als Zusatzeinrichtung zum Aufspannen von Flachmaterial 2 in der Aufspanneinrichtung 3 einer Bearbeitungsmaschine 4 (Fig. 3 und 4) bestimmt. Bei dem dargestellten Ausführungsbeispiel ist die Bearbeitungsmaschine 4 eine Kopierfräsmaschine, die einen Fräskopf 5 mit senkrechtem Fräser 6 aufweist. Derartige Bearbeitungsmaschinen dienen überwiegend zur Bearbeitung von rechteckigen Profilstäben für die Herstellung von Fensterrahmen und Türrahmen. Die Aufspanneinrichtung 3 der Bearbeitungsmaschine 4 weist deshalb zwei senkrechte Anschlagflächen 7 auf, gegenüber denen jeweils ein waagrechter, druckmittelbetätigter Spannzylinder 8 angeordnet ist, um den zu bearbeitenden Profilstab einzuspannen.

Die Spannvorrichtung 1 ist dazu bestimmt, anstelle eines solchen Profilstabs in der Aufspanneinrichtung 3 aufgenommen zu werden.

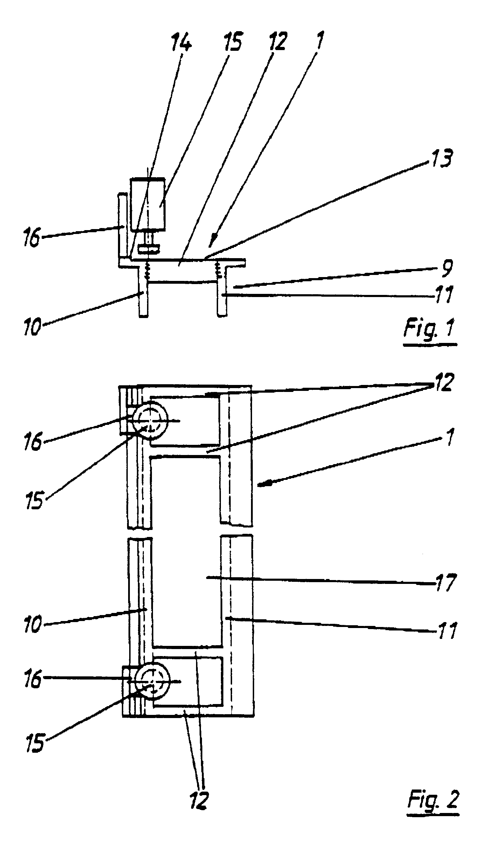

Die Spannvorrichtung 1 weist einen in seinem Querschnitt angenähert rechteckigen Grundkörper 9 auf (Fig. 1), der bei dem dargestellten Ausführungsbeispiel aus zwei Seitenwänden 10, 11 mit dazwischen angeordneten Querstegen 12 besteht. Die Oberkante der Seitenwände 10, 11 und der verbindenden Querstege 12 bilden eine horizontale Auflagefläche 13 für das Flachmaterial 2. Von dem einen, äußeren Längsrand der Auflagefläche 13 springt ein Kantenanschlag 14 nach oben entgegengesetzt zum Grundkörper 9 vor. Oberhalb der Auflagefläche 13 ist an beiden Enden der Spannvorrichtung 1 jeweils ein nach unten gerichteter Spannzylinder 15 vorgesehen, der vorzugsweise mittels Druckluft betätigt wird. Jeder Spannzylinder 15 ist über einen Träger 16 mit der einen Seitenwand 10 verbunden. Der Kantenanschlag 14, der beispielsweise durch eine von der Auflagefläche 13 nach oben vorspringende Anschlagleiste gebildet wird, ist ebenfalls mit der Seitenwand 10 verbunden.

Die Querstege 12 sind ebenso wie die Spannzylinder 15 nahe den beiden Enden der Spannvorrichtung 1 im Bereich der Spannzylinder 8 der Aufspanneinrichtung 3 der Bearbeitungsmaschine 4 angeordnet, um an diesen Stellen die von den Spannzylindern 8 ausgeübte Querkraft zu übertragen. Dort liegen die beiden Spannzylinder 15 außerhalb des Bearbeitungsbereichs der Bearbeitungsmaschine 4.

Um einen ungehinderten Durchtritt des Fräsers 6 durch das Flachmaterial 2 zu ermöglichen oder bei der Plasmabearbeitung einen ungehinderten Austritt des Plasmaschneidstrahls aus dem zu bearbeitenden Flachmaterial 2 zu ermöglichen, weist die Auflagefläche 13 im mittleren Bearbeitungsbereich eine Aussparung 17 auf. Bei dem dargestellten Ausführungsbeispiel bilden die beiden Seitenwände 10, 11 und die Querstege 12 einen im Grundriß im wesentlichen länglich-rechteckigen Rahmen, dar die nach oben und unten offene Aussparung 17 umschließt.

In den Figuren 3 und 4 ist als Beispiel für das zu bearbeitende Flachmaterial 2 ein Flachstab dargestellt, in dem beispielsweise eine Drückerbohrung 2a und eine Profilzylinderausnehmung 2b durch Kopieren von einer Kopierschablone 18 ausgefräst werden soll. In Fig. 3 ist mit strichpunktierten Linien angedeutet, daß anstelle des verhältnismäßig schmalen Flachstabs 2 auch eine Platte oder ein Blech 2' eingespannt und bearbeitet werden kann.

Die Druckluftversorgung der Spannzylinder 15 kann durch die Druckluftanlage der Bearbeitungsmaschine 4 erfolgen, die auch die Spannzylinder 8 versorgt. Hierzu wird zweckmäßigerweise eine (nicht dargestellte) Druckluft-Steckverbindung vorgesehen, mit der die Spannzylinder 15 leicht lösbar an die Druckluftanlage der Bearbeitungsmaschine 4 angeschlossen werden können. Die Betätigung der Spannzylinder 15 kann durch (nicht dargestellte) Taster, Lichtschranken oder ähnliche Sensoren erfolgen, die ausgelöst werden, wenn ein Flachmaterial 2 an den Kantenanschlag 14 angelegt wird. Die Betätigung kann auch durch einen Fußschalter erfolgen, mit dem zugleich der Bearbeitungszyklus der Bearbeitungsmaschine 4 eingeleitet wird.

## Patentansprüche

1. Spannvorrichtung zum Aufspannen von Flachmaterial, insbesondere Flachstäben, Platten od.dgl., auf einer Bearbeitungsmaschine, die eine Aufspanneinrichtung für rechteckige Profilstäbe aufweist, mit einem in die Aufspanneinrichtung (3) der Bearbeitungsmaschine (4) einspannbaren Grundkörper (9), der an seiner Oberseite eine Auflagefläche (13) für das Flachmaterial (2, 2') bildet, wobei die Auflagefläche (13) mindestens in einem mittleren Bearbeitungsbereich eine Aussparung (17) aufweist, ein Kantenanschlag (14) für das Flachmaterial (2, 2') von dem einen, äußeren Längsrund der Auflagefläche (13) entgegengesetzt zum Grundkörper (9) vorspringt, und oberhalb der Auflagefläche (13) mindestens zwei jeweils über einen Träger (16) mit dem Grundkörper (9) starr verbundene Spannzylinder (15) angeordnet sind, die das Flachmaterial (2, 2') gegen die Auflagefläche (13) spannen.

2. Spannvorrichtung nach Anspruch 1, dadurch gekennzeichnet, daß der Kantenanschlag (14) eine von der Auflagefläche (13) nach oben vorspringende Anschlagleiste ist.

3. Spannvorrichtung nach Anspruch 1, dadurch gekennzeichnet, daß der Grundkörper (9) zwei durch Querstege (12) miteinander verbundene parallele Seitenwände (10, 11) aufweist, daß die Oberkanten der Seitanwände (10, 11) und der Querstege (12) die Auflagefläche (13) für das Flachmaterial (2, 2') bilden und daß der Kantenanachlag (14) und die Träger (16) der Spannzylinder (15) mit einer der beiden Seitenwände (10) verbunden sind.

4. Spannvorrichtung nach Anspruch 3, dadurch gekennzeichnet, daß die Querstege (12) mindestens im Bereich der Spannzylinder (8) der Aufspanneinrichtung (3) der Bearbeitungsmaschine (4) angeordnet sind.

5. Spannvorrichtung nach Anspruch 3, dadurch gekennzeichnet, daß die Querstege (12) und die beiden Spannzylinder (15) an den beiden Enden das Grundkörpers (9) angeordnet sind.

6. Spannvorrichtung nach Anspruch 3, dadurch gekennzeichnet, daß die beiden Seitenwände (10, 11) und die Querstege (12) einen im Grundriß im wesentlichen länglich-rechteckigen Rahmen bilden, der die nach oben und unten offene Aussparung (17) umschließt.

7. Spannvorrichtung nach Anspruch 5 oder 6, dadurch gekennzeichnet, daß an den Enden des Grundkörpers (9) jeweils zwei Querstege (17) im Abstand zueinander angeordnet sind.

8. Spannvorrichtung nach Anspruch 1, dadurch gekennzeichnet, daß die beiden Spannzylinder (15) außerhalb das Bearbeitungsbereichs der Bearbeitungsmaschine (4) angeordnet sind.

## Claims

1. Clamping device for clamping a flat workpiece, especially flat bars, boards or the like, on a processing machine which has a chucking device for rectangular profile bars, having a basic body (9) which can be clamped into the chucking mechanism (3) of the processing machine (4) which, forms on its upper side a support surface (13) for the flat workpiece (2, 2'), the support surface (13) having a recess (17) at least in a central machining zone, an edge shoulder (14) for the flat workpiece (2, 2') projecting from one, outer longitudinal edge of the support surface (13) opposite the basic body (9), and above the support surface (13) at least two tensioning cylinders (15) being located, each rigidly joined through a carrier (16) to the basic body (9), said tensioning cylinders clamping the flat workpiece (2, 2') against the support surface (13).

2. Clamping device according to Claim 1, characterized in that the edge shoulder (14) is one of the stop ledges projecting upwards from the support surface (13).

3. Clamping device according to Claim 1, characterized in that the basic body (9) has two parallel side walls (10, 11) connected to each other by transverse webs (12), that the top edges of the side walls (10, 11) and of the transverse webs (12) form the support surface (13) for the flat workpiece (2, 2') and that the edge shoulder (14) and the carriers (16) of the tensioning cylinders (15) are joined to one of the two side walls (10).

4. Clamping device according to Claim 3, characterized in that the transverse webs (12) are located at least in the zone of the tensioning cylinders (8) of the chucking mechanism (3) of the processing machine.

5. Clamping device according to Claim 3, characterized in that the transverse webs (12) and the two tensioning cylinders (15) are located at the two ends of the basic body (9).

6. Clamping device according to Claim 3, characterized in that the two side walls (10, 11) and the transverse webs (12) form in plan view an essentially oval-rectangular frame which encloses the recess (17) open at the top and at the bottom.

7. Clamping device according to Claim 5 or 6, characterized in that, at the ends of the basic body (9), in each case two transverse webs (17) are located at a distance from each other.

8. Clamping device according to Claim 1, characterized in that the two tensioning cylinders (15) are located outside the machining zone of the processing machine (4).

## Revendications

1. Dispositif de serrage pour serrer une matière de forme plane, en particulier des barres plates, des plaques, etc. sur une machine d'usinage, qui présente un dispositif de serrage pour des barres profilées rectangulaires, comportant un corps de base (9) susceptible d'être serré dans le dispositif de serrage (3) de la machine d'usinage (4), ledit corps formant sur sa face supérieure une surface d'appui (13) pour la matière plane (2, 2'), dispositif dans lequel la surface d'appui (13) présente, au moins dans une zone d'usinage centrale, un évidement (17), une butée de champ (14) pour la matière plane (2, 2') fait saillie d'un bord longitudinal externe de la surface d'appui (13) à l'opposé du corps de base (9), et, au-dessus de la surface d'appui (13), sont agencés au moins deux cylindres de serrage (15) reliés de manière rigide respectivement via un support (16) au corps de base (9), ces cylindres serrant la matière plane (2, 2') contre la surface d'appui (13).

2. Dispositif de serrage selon la revendication 1, caractérisé en ce que la butée de champ (14) est une latte de butée faisant saillie vers le haut de la surface d'appui (13).

3. Dispositif de serrage selon la revendication 1, caractérisé en ce que le corps de base (9) présente deux parois latérales (10, 11) parallèles reliées l'une à l'autre par des traverses (12), les arêtes supérieures des parois latérales (10, 11) et des traverses (12) forment la surface d'appui (13) pour la matière plane (2, 2') et la butée de champ (14) et le support (16) des cylindres de serrage (15) sont reliés à l'une des deux parois latérales (10).

4. Dispositif de serrage selon la revendication 3, caractérisé en ce que les traverses (12) sont agencées au moins dans la zone des cylindres de serrage (8) du dispositif de serrage (3) de la machine d'usinage (4).

5. Dispositif de serrage selon la revendication 3, caractérisé en ce que les traverses (12) et les deux cylindres de serrage (15) sont agencés aux deux extrémités du corps de base (9).

6. Dispositif de serrage selon la revendication 3, caractérisé en ce que les deux parois latérales (10, 11) et les traverses (12) forment un bâti rectangulaire sensiblement longitudinal en projection horizontale, qui entoure l'évidement (17) ouvert vers le haut et vers le bas.

7. Dispositif de serrage selon la revendication 5 ou 6, caractérisé en ce qu'aux extrémités du corps de base (9) sont agencés, respectivement, deux traverses (12) à distance l'une de l'autre.

8. Dispositif de serrage selon la revendication 1, caractérisé en ce que les deux cylindres de serrage (15) sont agencés en dehors de la zone d'usinage de la machine d'usinage (4).
